# EUROPEAN PATENT APPLICATION

(11) **EP 4 817 726 A1**
(43) Date of publication of application: **07.10.2026**
(21) Application number: 23959635.6
(22) Date of filing: 30.11.2023
(51) Int. Cl.: B01F 27/192, B01F 27/09, B01F 27/90, B01F 27/112, C08F 2/18

(54) **STIRRING DEVICE, STIRRING METHOD, COMPOSITION FOR DIP MOLDING, AND DIP MOLDING**

(71) Applicant: Sumitomo Heavy Industries Process Equipment Co., Ltd., Saijo-shi, Ehime 799-1393 (JP); Bangkok Synthetics Co. Ltd., 10500 Bangkok (TH)
(72) Inventor: TAKENAKA Katsuhide, Saijo-shi, Ehime 799-1393 (JP); OTA Hisanori, Bangrak, Bangkok 10500 (TH)
(74) Representative: Louis Pöhlau Lohrentz
(86) International application number: PCT/JP2023/042933
(87) International publication number: WO 2025/115183

(57) **Abstract**

A stirring device 1 includes a stirring blade 3 that stirs, by rotation, a fluid to be stirred, which is accommodated in a stirring tank 2, in which a ratio L/D of a liquid level height L of the fluid to be stirred in a height direction in the stirring tank 2 to a tank diameter D of the stirring tank 2 in a radial direction is 2 or more, the stirring blade 3 includes a plurality of blade portions 31 to 35 disposed to be separated from each other in the height direction, each of the blade portions 31 to 35 generates a flow of the fluid to be stirred having a height direction component toward a bottom portion 22 of the stirring tank 2 by the rotation, and blade diameters of the plurality of blade portions 31 to 35 in the radial direction increase as the blade portion is closer to the bottom portion 22 of the stirring tank 2.

## Description

### Technical Field

The present disclosure relates to a stirring device and the like.

### Background Art

PTL 1 discloses a stirring device that generates a latex (also referred to as an emulsion) in which polymer (high-molecular-weight) particles are dispersed in a medium such as water by a polymerization reaction of a monomer in a stirring tank.

### Citation List

### Patent Literature

[PTL 1] Japanese Unexamined Patent Publication No. H10-33966

### Summary of Invention

### Technical Problem

In order to efficiently release a heat of reaction (hereinafter, also referred to as a polymerization heat) in a polymerization reaction to the outside of a stirring tank, for example, a stirring tank in which a ratio L/D of a liquid level height L of a fluid to be stirred to a tank diameter D of the stirring tank is 2 or more is often used. In order to effectively stir a fluid to be stirred in such a vertically long stirring tank, PTL 1 proposes to use a stirring blade having a special shape.

The present disclosure has been made in view of such circumstances, and an object of the present disclosure is to provide a stirring device and the like capable of effectively stirring a fluid to be stirred in a stirring tank without using a stirring blade having a special shape.

### Solution to Problem

In order to solve the above-described problem, a stirring device according to an aspect of the present disclosure is a stirring device including a stirring blade that stirs, by rotation a fluid to be stirred, which is accommodated in a stirring tank, in which a ratio L/D of a liquid level height L of the fluid to be stirred in a height direction in the stirring tank to a tank diameter D of the stirring tank in a radial direction is 2 or more, and the stirring blade includes a plurality of blade portions disposed to be separated from each other in the height direction. Blade diameters of the plurality of blade portions in the radial direction increase as the blade portions are closer to a bottom portion of the stirring tank, and each of the plurality of blade portions generates a flow of the fluid to be stirred having a height direction component toward the bottom portion of the stirring tank.

In this aspect, the stirring blade having a multistage configuration in the height direction in accordance with the vertically long stirring tank in which L/D is 2 or more generates the flow of the fluid to be stirred having the height direction component toward the bottom portion of the stirring tank. Since the blade diameters of the plurality of blade portions constituting the stirring blade increase as the blade portion is closer to the bottom portion of the stirring tank, the fluid to be stirred flowing toward the bottom portion is effectively supplied to the blade portion having a large diameter on the bottom portion side and is stirred. Here, since a shape of each blade portion is optional as long as the flow of the fluid to be stirred toward the bottom portion of the stirring tank can be generated, and for example, a general paddle blade can be used, the fluid to be stirred in the stirring tank can be effectively stirred without using the stirring blade having a special shape as in PTL 1.

Another aspect of the present disclosure is a stirring method. This method is a stirring method in a stirring device including a stirring blade that stirs, by rotation, a fluid to be stirred, which is accommodated in a stirring tank, in which a ratio L/D of a liquid level height L in a height direction of the fluid to be stirred in the stirring tank to a tank diameter D in a radial direction of the stirring tank is 2 or more, and the stirring blade includes a plurality of blade portions that are disposed to be separated from each other in the height direction and that have blade diameters in the radial direction increasing as the blade portions are closer to a bottom portion of the stirring tank. A flow of the fluid to be stirred having a height direction component toward the bottom portion of the stirring tank is generated by the rotation of each of the blade portions.

Any combination of the above-described components, and any implementation obtained by converting these expressions into a method, a device, a system, a recording medium, a computer program, or the like, is also encompassed by the present disclosure.

### Advantageous Effects of Invention

According to the present disclosure, the fluid to be stirred in the stirring tank can be effectively stirred without using the stirring blade having a special shape.

### Brief Description of Drawings

FIG. 1 is a vertical cross-sectional view of the stirring device.
FIG. 2 is a comparative example of the stirring device.
FIG. 3 is a graph comparing a monomer concentration for each height in a stirring tank between the comparative example and an embodiment.
FIG. 4 is a flow pattern of the comparative example.
FIG. 5 is a flow pattern of the embodiment.
FIG. 6 shows production conditions, an amount of agglomerates, and measured physical strength of nitrile gloves according to Examples 1 to 4 and Comparative Examples 1 to 4.

### Description of Embodiments

Hereinafter, an embodiment for carrying out the present disclosure (hereinafter, also referred to as the embodiment) will be described in detail with reference to the drawings. In the description and/or drawings, the same or equivalent components, members, processing, and the like are denoted by the same reference numerals, and the repeated description will be omitted. The scale and shape of each shown part are conveniently set to simplify description, and should not be interpreted as being limited unless otherwise specified. The embodiment is illustrative and does not limit the scope of the present disclosure in any way. All the features and combinations thereof described in the embodiment are not necessarily essential to the present disclosure.

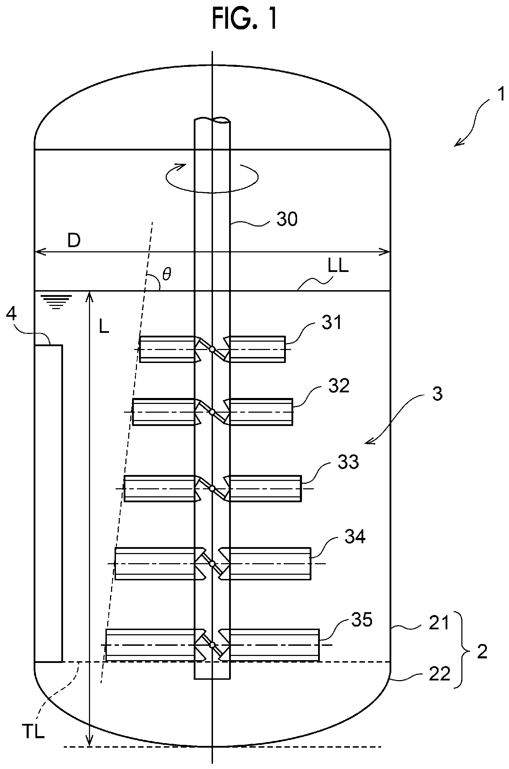

FIG. 1 is a longitudinal sectional view of a stirring device 1 according to an embodiment of the present disclosure. In the present embodiment, the stirring device 1 is installed in a vertical direction in FIG. 1, which is an up-down direction, a longitudinal direction, and a height direction, and the up-down direction, the longitudinal direction, the height direction, and the vertical direction are used synonymously, and the left-right direction, the lateral direction, and the horizontal direction are used synonymously. The present disclosure can also be applied to a stirring device 1 that is not installed in the vertical direction, and in such a case, the up-down direction, the longitudinal direction, and the height direction are different from the vertical direction, and the left-right direction and the lateral direction are different from the horizontal direction. In addition, as will be described later, since a rotary shaft 30 of a stirring blade 3 is provided in the up-down direction, the longitudinal direction, the height direction, and the vertical direction, the up-down direction, the longitudinal direction, the height direction, and the vertical direction are also referred to as an axial direction. Further, since the left-right direction, the lateral direction, and the horizontal direction determine the diameter of a stirring tank 2 and the stirring blade 3, the left-right direction, the lateral direction, and the horizontal direction are also referred to as a radial direction.

The stirring device 1 includes a stirring tank 2 that accommodates a fluid to be subjected to stirring (fluid to be stirred), and a stirring blade 3 that stirs the fluid in the stirring tank 2 by rotation. The stirring tank 2 includes a straight tubular portion 21 that is provided above and extends in the axial direction in a circular pipe shape, and a bottom portion 22 that is provided below continuously with the straight tubular portion 21. An inner peripheral wall or a side wall of the straight tubular portion 21 has a circular cross section in a top view (in the axial direction), and the diameter D thereof is also referred to as a tank diameter D of the stirring tank 2 below. In addition, the cross section of the straight tubular portion 21 and/or the stirring tank 2 in a top view may have any non-circular shape. In this case, the tank diameter D of the stirring tank 2 may be a diameter of an inscribed circle of the cross-sectional shape, a diameter of a circumscribed circle of the cross-sectional shape, or an average value or an intermediate value of the diameters. At least a part of the straight tubular portion 21 above is open such that the fluid to be stirred can be put in (not shown), and can be closed by a lid or the like during the stirring of the fluid by the stirring blade 3. The fluid to be stirred may be supplied into the stirring tank 2 from a fluid supply port such as a supply nozzle provided on a side surface of the straight tubular portion 21.

The bottom portion 22 of the stirring tank 2 is formed in a curved shape that bulges downward from a lower end of the straight tubular portion 21. The lowermost portion of the stirring tank 2 is formed by a bulging end of the curved shape at the center of the bottom portion 22. A discharge port through which the fluid in the stirring tank 2 can be discharged to the outside of the stirring device 1 may be provided at the lowermost portion of the stirring tank 2. The discharge port may be configured to be openable and closable by a discharge port opening/closing portion such as a valve. When the fluid to be stirred is put into and held in the stirring tank 2, when the fluid before discharge is stirred by the stirring blade 3 to promote mixing or a chemical reaction, or when the concentration is made uniform, the discharge port is closed by a valve or the like controlled to be in a closed state. In addition, when the fluid to be discharged after the mixing or the chemical reaction is substantially completed and the concentration is made uniform is discharged while being stirred by the stirring blade 3 as necessary, the discharge port is opened by a valve or the like controlled to be in an open state. The fluid after stirring may be discharged from an opening in a state where a lid above the stirring tank 2 or the like is opened. In addition, the fluid after stirring may be discharged to the outside of the stirring tank 2 from a fluid discharge port such as a discharge nozzle provided on a side surface of the straight tubular portion 21.

A boundary line between the substantially circular straight tubular portion 21 and the curved bottom portion 22 in the horizontal direction is also referred to as a tangent line TL. Hereinafter, a distance L in a vertical direction between the lowermost portion of the stirring tank 2 (bottom portion 22) and a surface or a liquid level LL of the fluid in the stirring tank 2 is also referred to as a liquid level height or a reference level. In the present embodiment, a ratio L/D of the liquid level height L in the height direction of the fluid to be stirred in the stirring tank 2 to a tank diameter D in the radial direction of the stirring tank 2 is 2 or more. Since the area of the side wall serving as a heat dissipation surface can be increased, the vertically long stirring tank 2 is suitable for stirring (chemical reaction) of the fluid to be stirred accompanied by a large amount of reaction heat. Emulsion polymerization is exemplified as such a chemical reaction.

The fluid to be stirred for emulsion polymerization contains an aqueous medium such as water and a monomer to be emulsion-polymerized. As the monomer in the present embodiment, a monomer having a conjugated diene structure and containing, by polymerization, a carboxyl group in a polymer chain is suitable. Typically, an emulsifier (surfactant or the like) or a polymerization initiator (radical generator or the like) is also added to the fluid to be stirred. In a case where a specific gravity difference between a component having the maximum specific gravity (typically, a medium) and a component having the minimum specific gravity (typically, a monomer) among a plurality of components contained in the fluid to be stirred before emulsion polymerization is more than 0.2 and less than 0.4, the stirring device 1 according to the present embodiment can exhibit the desired stirring performance. However, the stirring device 1 according to the present embodiment may be used for stirring the fluid to be stirred outside the range of the specific gravity difference. As a result of promoting the emulsion polymerization of the monomer in the fluid to be stirred by the stirring of the rotating stirring blade 3, a latex in which polymer particles are dispersed in the medium is obtained as a final product.

The stirring blade 3 is provided to be rotatable around a rotary shaft 30 in the vertical direction that substantially coincides with a center axis of the stirring tank 2 in the vertical direction. Although not shown, a rotary drive unit such as a motor that generates rotational power or a rotational power conversion unit such as a speed changer or a reduction gear that converts the rotational power into a desired number of revolutions (or rotational speed) or torque may be provided above the rotary shaft 30. A lower bearing may be provided below the rotary shaft 30.

A baffle 4 that extends substantially in the axial direction over most of a liquid level height L and that projects substantially in the radial direction toward a center axis of the stirring tank 2 (or the rotary shaft 30 of the stirring blade 3) is provided in the vicinity of an inner peripheral wall of a straight tubular portion 21 in the stirring tank 2. Although not shown, a plurality of baffles 4 may be provided along the circumferential direction. Since the fluid to be stirred rotated in the circumferential direction by the stirring blade 3 hits the baffle 4, which is also called a baffle plate, co-rotation in which the fluid to be stirred is rotated in the same manner as the stirring blade 3 due to inertia is prevented. The baffle 4 should not hinder the rotation of the stirring blade 3 itself, and is disposed in a radial range outside a rotation region of a lowermost blade portion 35 having the largest blade diameter among a plurality of blade portions 31 to 35 described later.

The stirring blade 3 includes a plurality of (five in the example of FIG. 1) blade portions 31 to 35 having different blade diameters that are disposed to be separated from each other in the height direction (axial direction). Each of the blade portions 31 to 35 is a small stirring blade that extends substantially linearly or substantially in a planar shape (with the rotary shaft 30 as a normal line) in the radial direction from the rotary shaft 30. Each of the blade portions 31 to 35 can be configured by any type and/or shape of stirring blade as long as at least a part of an action and/or an effect (particularly, an action described later of directly generating a flow of the fluid to be stirred having a height direction component toward a bottom portion 22 of the stirring tank 2) described later can be realized. In the present embodiment, an example will be described in which all of the blade portions 31 to 35 are inclined paddle blades including one or a plurality of stirring surfaces in which a normal direction of a stirring surface is inclined with respect to both the axial direction and the horizontal direction, but a part or all of the plurality of blade portions 31 to 35 may be configured by an axial flow impeller such as a hydrofoil.

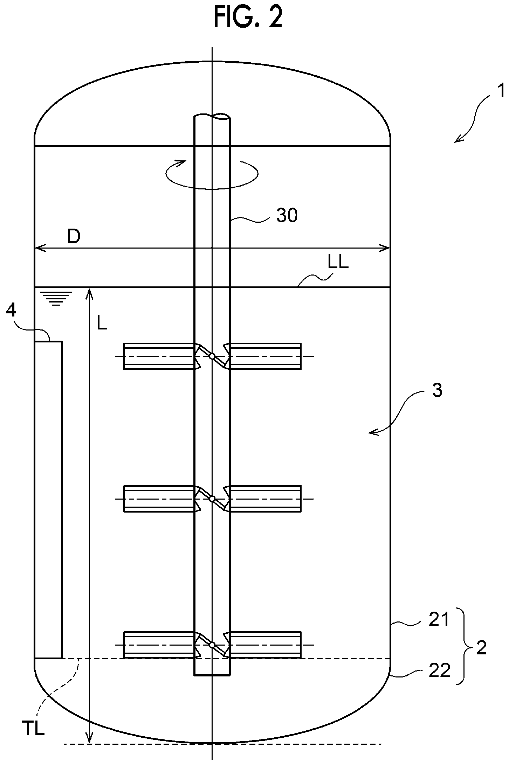

It is preferable that the plurality of blade portions 31 to 35 are disposed at substantially equal intervals along the height direction. In particular, in order to realize the action and/or the effect of the present embodiment described later, a distance (interval) in the height direction between two blade portions 31 and 32, 32 and 33, 33 and 34, and 34 and 35 adjacent to each other in the height direction is preferably smaller than a blade diameter of the uppermost blade portion 31, and more preferably smaller than a radius (half of the blade diameter) of the uppermost blade portion 31. As will be clear in comparison with FIG. 2 as a comparative example (general example) described later, in the present embodiment of FIG. 1, the intervals between the blade portions 31 to 35 are generally shorter than those in the comparative example. Alternatively, in the present embodiment of FIG. 1, the number of the blade portions 31 to 35 is generally larger than that in the comparative example. The intervals between the plurality of blade portions 31 to 35 in the height direction may be different from each other.

The blade diameters of the plurality of blade portions 31 to 35 in the radial direction increase as the blade portions are closer to the bottom portion 22 of the stirring tank 2. Specifically, the blade diameter of the uppermost blade portion 31 farthest from the bottom portion 22 is the smallest, and the blade diameter of the lowermost blade portion 35 closest to the bottom portion 22 is the largest. In addition, the blade diameters of the blade portions 31 to 35 gradually or stepwise increase from the uppermost blade portion 31 to the lowermost blade portion 35. The increase ratios of the blade diameters of the two blade portions 31 and 32, 32 and 33, 33 and 34, and 34 and 35 adjacent to each other in the height direction may be equal to or different from each other. For example, in order to realize the action and/or the effect of the present embodiment described later, an angle θ formed by a straight line connecting the tips of the two blade portions (for example, a pair of the blade portions 31/32) adjacent to each other in the height direction in the radial direction and the liquid level LL or the horizontal plane is preferably 65 degrees or more and less than 85 degrees, and more preferably 75 degrees or more and less than 85 degrees.

In addition, in order to realize the action and/or the effect of the present embodiment described later, the blade diameter of the uppermost blade portion 31 farthest from the bottom portion 22 of the stirring tank 2 among the plurality of blade portions 31 to 35 is preferably 30% or more and less than 55% of the tank diameter D, and more preferably 35% or more and less than 50% of the tank diameter D. Similarly, in order to realize the action and/or the effect of the present embodiment described later, the blade diameter of the lowermost blade portion 35 closest to the bottom portion 22 of the stirring tank 2 among the plurality of blade portions 31 to 35 is preferably 50% or more and less than 80% of the tank diameter D, and more preferably 60% or more and less than 70% of the tank diameter D. As shown in the drawing, it is preferable that the lowermost blade portion 35 is disposed at an axial position adjacent to or overlapping with the tangent line TL.

Each of the blade portions 31 to 35 constituting the stirring blade 3 as described above generates a flow of the fluid to be stirred having a height direction component (downward component) toward the bottom portion 22 of the stirring tank 2 by the rotation around the rotary shaft 30. As described above, all of the blade portions 31 to 35 in the present embodiment are inclined paddle blades including an inclined stirring surface. Specifically, the normal direction of the stirring surface of each of the blade portions 31 to 35 is neither parallel to nor perpendicular to both the axial direction (the up-down direction in FIG. 1) and the circumferential direction (the direction perpendicular to the paper surface in FIG. 1). In the example of FIG. 1, the portion of each of the blade portions 31 to 35 extending to the right side of the rotary shaft 30 is inclined such that the upper edge is on the front side of the paper surface and the lower edge is on the back side of the paper surface. Similarly, the portion of each of the blade portions 31 to 35 extending to the left side of the rotary shaft 30 is inclined such that the upper edge is on the back side of the paper surface and the lower edge is on the front side of the paper surface. By rotating each of the blade portions 31 to 35 in the direction schematically shown around the rotary shaft 30, a downward flow of the fluid to be stirred toward the bottom portion 22 of the stirring tank 2 is generated.

The flow generated by each of the blade portions 31 to 35 may include a radial component (lateral component) and particularly a component in a direction away from the rotary shaft 30 in the radial direction, in addition to the height direction component. Therefore, the fluid to be stirred, which is stirred by each of the blade portions 31 to 35 flows downward while spreading in the radial direction around the rotary shaft 30. In the present embodiment, since the blade diameters of the plurality of blade portions 31 to 35 constituting the stirring blade 3 increase as the blade portion is closer to the bottom portion 22 of the stirring tank 2, the fluid to be stirred flowing toward the bottom portion 22 is effectively supplied to and stirred by the blade portion having a large diameter on the bottom portion 22 side. Therefore, the emulsion polymerization of the monomer in the fluid to be stirred is effectively promoted, and as a result, a high-quality final product (latex or the like) is obtained.

FIG. 2 is a comparative example of the stirring device 1. The stirring device 1 is different from the stirring device 1 and the stirring blade 3 according to the present embodiment of FIG. 1 only in the configuration. Specifically, the interval between the plurality of blade portions in the height direction in the stirring blade 3 of FIG. 2 is longer than the interval between the plurality of blade portions 31 to 35 in the height direction in the stirring blade 3 of FIG. 1. In addition, the number of blade portions (3) in the stirring blade 3 of FIG. 2 is smaller than the number of blade portions 31 to 35 (5) in the stirring blade 3 of FIG. 1. Further, the blade diameters of the plurality of blade portions in the stirring blade 3 of FIG. 2 are equal to each other.

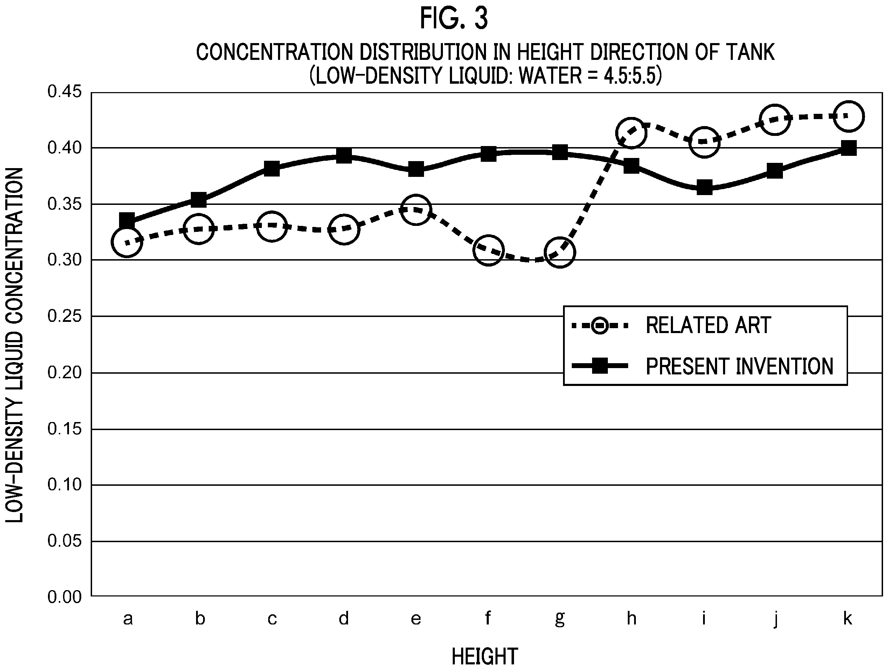

FIG. 3 is a graph comparing the monomer concentration for each height in the stirring tank 2 between the comparative example (FIG. 2) and the present embodiment (FIG. 1). The height "a" in this figure is a position lower than the liquid level LL and higher than the uppermost blade portion 31 in FIG. 1. In addition, the height "k" in this figure is a position lower than the lowermost blade portion 35 in FIG. 1 and higher than the lowermost portion of the stirring tank 2 (bottom portion 22). The intermediate heights "b" to "j" are positions obtained by equally dividing the space between the uppermost height "a" and the lowermost height "k". In this comparison, a fluid to be stirred in which the volume ratio of the monomer to water (medium) was "4.5:5.5" was used. Therefore, the closer the monomer concentration in the graph is to "0.45", the better the monomer in the medium is stirred.

In the comparative example, the monomer concentration is close to the target value of "0.45" at the heights "h" to "k" close to the lower portion of the stirring tank 2, but the monomer concentration is significantly lower than the target value of "0.45" at the heights "a" to "g" above the heights "h" to "k". As described above, it can be seen that the stirring blade 3 of the comparative example has insufficient stirring performance above the stirring tank 2 for the fluid to be stirred containing components having a large specific gravity difference (generally between 0.2 and 0.4 as described above) such as the monomer and water. On the other hand, in the stirring blade 3 of the present embodiment, a high level of monomer concentration is realized over the entire height "a" to "k". As described above, according to the stirring blade 3 of the present embodiment, the fluid to be stirred can be stirred more effectively than in the comparative example, and the uniformity of the concentration of the fluid to be stirred can be increased even at a large liquid level height L of the vertically long stirring tank 2.

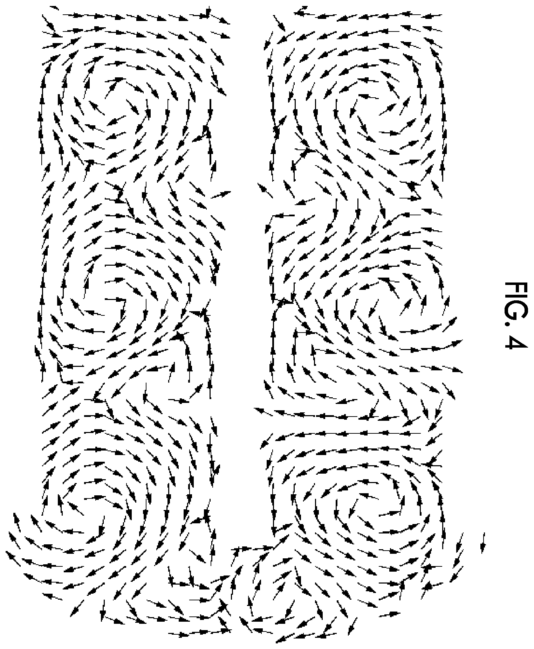

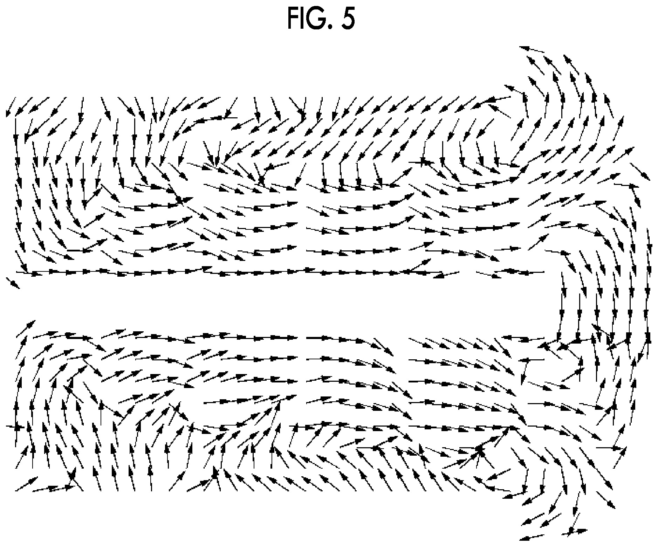

FIGS. 4 and 5 are flow patterns visualizing the flow of the fluid to be stirred in the stirring tank 2 between the comparative example (FIG. 2) and the present embodiment (FIG. 1). In FIG. 4, which is the flow pattern of the comparative example, the fluid to be stirred circulates in a limited axial region on the outer side (both left and right sides) of each blade portion in the radial direction. As described above, in the fluid to be stirred containing components having a large specific gravity difference such as the monomer and water, a flow partition wall is formed between the blade portions, and the fluid to be stirred locally circulates, resulting in deterioration of the stirring performance of the entire stirring tank 2 (as shown in FIG. 3, the uniformity of the concentration of the fluid to be stirred deteriorates). In addition, as a result of the fluid to be stirred being stagnant in the partition wall portion, the low specific gravity monomer or polymer is likely to adhere to the blade portion.

On the other hand, in FIG. 5, which is the flow pattern of the present embodiment, the flow of the fluid to be stirred is smoothly transferred from the upper blade portion to the lower blade portion, and the fluid to be stirred is sequentially stirred from the uppermost blade portion 31 to the lowermost blade portion 35 (that is, over substantially the entire liquid level height L). The local circulation in the vicinity of each blade portion as in the comparative example of FIG. 4 is significantly reduced, and a flow of the fluid to be stirred that circulates significantly between the uppermost portion and the lowermost portion of the vertically long stirring tank 2 is formed. As a result, the fluid to be stirred is less likely to be stagnant between the blade portions, and thus the monomer or polymer is less likely to adhere to the blade portion. As a result of the experiment, the amount of adhesion to the stirring blade 3 of the present embodiment was reduced to about 30% of the amount of adhesion to the stirring blade 3 of the comparative example.

The stirring device 1 according to the present embodiment as described above is suitable for promoting emulsion polymerization, and can be used, for example, for the production of emulsion polymerization compositions and other compositions as follows. In particular, in an emulsion copolymerization reaction carried out by copolymerizing monomers having a density difference, it is considered that the uniform distribution of the monomers in the reaction vessel greatly affects the uniformity of the composition of the obtained copolymer. Furthermore, the composition uniformity of the obtained copolymer can also affect the physical properties of the molded product molded by the polymer.

### [Production of Latex Composition]

The latex composition involved in the implementation of the present disclosure may be any latex composition produced using any copolymerizable monomer as long as it has, as a main component monomer, a monomer having a conjugated diene structure and containing, by polymerization, a carboxyl group in a polymer chain. Preferably, the latex composition is a carboxyl group-containing nitrile rubber latex. The carboxyl group-containing nitrile rubber latex is a latex produced by copolymerizing a conjugated diene monomer, an ethylenically unsaturated nitrile monomer, and a copolymerizable ethylenically unsaturated carboxylic acid monomer.

### [Conjugated Diene Monomer]

The conjugated diene monomer is not particularly limited as long as it has radical polymerization reactivity. Specific examples of the conjugated diene monomer include 1,3-butadiene, isoprene, 2,3-dimethyl-1,3-butadiene, 2-ethyl-1,3-butadiene, 1,3-pentadiene, and chloroprene. These conjugated diene monomers can be used alone or in combination of two or more kinds thereof.

### [Ethylenically Unsaturated Nitrile Monomer]

The ethylenically unsaturated nitrile monomer may be any monomer that has both a polymerizable unsaturated bond and a nitrile group in one molecule, and examples thereof include acrylonitrile, methacrylonitrile, fumaronitrile, α-chloroacrylonitrile, and α-cyanoethyl acrylonitrile. Among these, acrylonitrile or methacrylonitrile is preferable, and acrylonitrile is more preferable.

### [Ethylenically Unsaturated Carboxylic Acid Monomer]

The ethylenically unsaturated carboxylic acid monomer that is copolymerizable with the conjugated diene monomer and the ethylenically unsaturated nitrile monomer may be any monomer that has a polymerizable unsaturated bond and a carboxyl group in the molecule, and examples thereof include acrylic acid, methacrylic acid, itaconic acid, maleic acid, fumaric acid, maleic anhydride, and citraconic anhydride, and the monomer may be in an acid state or a salt state. Among these, acrylic acid or methacrylic acid is preferable.

### [Other Ethylenically Unsaturated Monomers]

In addition to the conjugated diene monomer, the ethylenically unsaturated nitrile monomer, and the ethylenically unsaturated carboxylic acid monomer, other ethylenically unsaturated monomers may be used as necessary. Examples thereof include ethylenically unsaturated sulfonic acid monomers such as acrylamidopropanesulfonic acid and styrenesulfonic acid; ethylenically unsaturated carboxylic acid ester monomers such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, itaconic acid monoethyl ester, fumaric acid monobutyl ester, maleic acid monobutyl ester, maleic acid dibutyl ester, fumaric acid dibutyl ester, maleic acid ethyl ester, maleic acid mono-2-hydroxypropyl ester, methoxymethyl (meth)acrylate, ethoxyethyl (meth)acrylate, methoxyethoxyethyl (meth)acrylate, cyanoethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, dimethylaminoethyl (meth)acrylate, 2-sulfoethyl acrylate, and 2-sulfopropyl methacrylate; ethylenically unsaturated amide monomers such as (meth)acrylamide, N-methylol (meth)acrylamide, N,N-dimethylol (meth)acrylamide, N-methoxymethyl (meth)acrylamide, and N-propoxymethyl (meth)acrylamide; vinyl aromatic monomers such as styrene, alkylstyrene, and vinylnaphthalene; fluoroalkyl vinyl ethers such as fluoroethyl vinyl ether; vinylpyridine; non-conjugated diene monomers such as vinyl norbornene, dicyclopentadiene, and 1,4-hexadiene; and the like.

### [Monomer Ratio of Copolymer]

In the production of the latex composition according to the present disclosure, in a case where these monomers are used in combination, the type and ratio thereof may be appropriately selected according to the purpose and use, and in a case where the conjugated diene monomer, the ethylenically unsaturated nitrile monomer, and other copolymerizable monomers are used in combination, the conjugated diene monomer is usually 30% to 90% by weight, preferably 50% to 78% by weight, the ethylenically unsaturated nitrile monomer is 10% to 50% by weight, preferably 20% to 40% by weight, and the other copolymerizable monomers are 0.1% to 20% by weight, preferably 2% to 10% by weight, with respect to all monomers. In addition, the other copolymerizable monomers are preferably an ethylenically unsaturated carboxylic acid monomer.

### [Emulsifier]

The emulsifier used in the production of the latex composition according to the present disclosure is not particularly limited, but is preferably an emulsifier that is usually used for emulsion polymerization, and examples thereof include nonionic emulsifiers such as polyoxyethylene alkyl ether, polyoxyethylene alkylphenol ether, polyoxyethylene alkyl ester, and polyoxyethylene sorbitan alkyl ester; anionic emulsifiers such as fatty acids and salts thereof of myristic acid, palmitic acid, oleic acid, and linolenic acid, phosphoric acid esters such as isopropyl phosphate and polyoxyethylene alkyl ether phosphate, alkyl diphenyl ether disulfonates, disodium lauryl diphenyloxy sulfonate, alkyl naphthalene sulfonates, sodium salts of naphthalene sulfonic acid formalin condensates, sodium dialkyl sulfosuccinates, alkylbenzene sulfonates, alkyl allyl sulfonates, higher alcohol sulfate salts, and alkyl sulfosuccinates; and copolymerizable emulsifiers having a double bond such as sulfoesters of α,β-unsaturated carboxylic acids, sulfate esters of α,β-unsaturated carboxylic acids, and sulfoalkyl aryl ethers. The amount of the emulsifier used is not particularly limited, but is 0.1 to 10 parts by weight, preferably 0.5 to 6.0 parts by weight, with respect to 100 parts by weight of the monomer mixture. The emulsifier may be used alone or in combination of two or more kinds thereof. In addition, the emulsifier may be used in a batch or in a divided manner during the production of the latex composition.

### [Chain Transfer Agent]

Examples of the chain transfer agent used in the production of the latex composition according to the present disclosure include t-dodecyl mercaptan, n-dodecyl mercaptan, and other mercaptans such as mercaptoethanol, halogenated hydrocarbons such as carbon tetrachloride, methylene chloride, and methylene bromide, and α-methylstyrene dimers. Mercaptans such as t-dodecyl mercaptan and n-dodecyl mercaptan are preferable.

### [Aqueous Medium]

As the aqueous medium used in the production of the latex composition according to the present disclosure, water is usually used, and the amount thereof is usually 70 to 250 parts by weight, preferably 80 to 170 parts by weight, with respect to 100 parts by weight of the monomer mixture. In a case where the amount of the aqueous medium is less than 70 parts by weight, the stability may be reduced in the polymerization step. In addition, in a case where the amount of the aqueous medium exceeds 250 parts by weight, more time and energy are required for the post-step treatment of the latex to be produced, and there is a problem in that the latex composition production step is not efficient.

### [Polymerization Initiator]

The polymerization initiator used in the production of the latex composition according to the present disclosure is not particularly limited, and examples thereof include potassium persulfate, ammonium persulfate, sodium persulfate, perphosphates, hydrogen peroxide, t-butyl hydroperoxide, 1,1,3,3-tetramethylbutyl hydroperoxide, p-menthane hydroperoxide, 2,5-dimethylhexane-2,5-dihydroperoxide, diisopropylbenzene hydroperoxide, cumene hydroperoxide, di-tert-butyl peroxide, di-α-cumyl peroxide, acetyl peroxide, isobutyryl peroxide, benzoyl peroxide, and azobisisobutyronitrile. These polymerization initiators can be used alone or in combination of two or more kinds thereof. The amount of the polymerization initiator used is usually 0.001 to 10 parts by weight with respect to 100 parts by weight of the above-mentioned monomer mixture. In addition, the peroxide initiator can be used as a redox polymerization initiator in combination with a reducing agent. The reducing agent is not particularly limited, and examples thereof include compounds having metal ions in a reduced state, such as ferrous sulfate and cuprous naphthenate, sulfonates such as sodium methanesulfonate, formaldehyde sulfoxylate salts such as sodium formaldehyde sulfoxylate, 2-hydroxy-2-sulfonatoacetate salts such as a disodium salt of 2-hydroxy-2-sulfonatoacetate, 2-hydroxy-2-sulfinatoacetate salts such as a disodium salt of 2-hydroxy-2-sulfinatoacetate, amines such as formdimethylaniline, and ascorbic acid. These reducing agents can be used alone or in combination of two or more kinds thereof. The amount of the reducing agent used is not particularly limited, but the weight ratio of the reducing agent to the peroxide (peroxide/reducing agent) is 0.01 to 100, preferably 0.1 to 50.

### [Polymerization Method of Latex Composition]

The latex composition production method according to the present disclosure can be performed by a general polymerization method, and the type of the polymerization reactor may be any type of batch, semi-batch, or continuous polymerization reactor. Examples of the method of adding the monomer include a method of adding the monomer to the polymerization reactor in a batch, a method of adding the monomer continuously or intermittently in accordance with the progress of the polymerization reaction, and a method of adding a part of the monomer to react to a specific conversion rate and then continuously or continually adding the remaining monomer, and any of these addition methods may be adopted. In addition, the monomers to be added may be used by mixing various monomers to be used in advance or may be used separately for each monomer. In a case where various monomers are mixed, the mixing ratio may be kept constant or changed. The polymerization temperature in a case of performing the polymerization reaction is not particularly limited, but is usually 0°C to 100°C and preferably 5°C to 70°C. At a point in time when a predetermined polymerization conversion rate is reached, the polymerization reaction is stopped by cooling the polymer or adding a polymerization terminator. The polymerization conversion rate in a case of stopping the polymerization reaction is usually preferably 90% or more and more preferably 93% or more.

### [Polymerization Terminator]

The polymerization terminator used in the production of the latex composition according to the present disclosure is not particularly limited, and examples thereof include nitrites such as sodium nitrite, potassium nitrite, and ammonium nitrite, ascorbic acid, citric acid, hydroxylamine, hydroxyamine sulfate, diethylhydroxylamine, hydroxyamine sulfonic acid and an alkali metal salt thereof, 2,2,6,6-tetramethylpiperidinoxy compounds such as 4-benzoyloxy-2,2,6,6-tetramethylpiperidinoxy, sodium dimethyldithiocarbamate, dimethyldithiocarbamate, hydroquinone derivatives, catechol derivatives, resorcinol derivatives, aromatic hydroxydithiocarboxylic acids such as hydroxydimethylbenzenedithiocarboxylic acid, hydroxydiethylbenzenedithiocarboxylic acid, and hydroxydibutylbenzenedithiocarboxylic acid, and alkali metal salts thereof. The polymerization terminator may be added after adding an aqueous solution of an inorganic base, for example, an aqueous solution of sodium hydroxide, an aqueous solution of potassium hydroxide, or an aqueous solution of ammonia, or may be added at the same time. The amount of the polymerization terminator used is usually 0.01 to 5 parts by weight and preferably 0.03 to 2 parts by weight with respect to 100 parts by weight of the monomer mixture.

### [Adjustment of Latex Composition]

After the polymerization reaction of the latex is stopped, a desired latex composition is produced by removing unreacted monomers, adjusting the solid content concentration and pH, and adding a surfactant, an antioxidant, a preservative, an antibacterial agent, and the like as necessary. In the production of the latex composition according to the present disclosure, polymerization auxiliary materials such as an oxygen scavenger, a dispersant, a surfactant, a chelating agent, a molecular weight modifier, a particle size modifier, an antioxidant, and a preservative may be used as necessary. The polymerization auxiliary material component may be an organic compound or an inorganic compound.

### [Blending Agent for Dip-Molding]

The dip-molding composition according to the present disclosure is produced by adjusting the latex composition by adding a blending agent for dip-molding. The blending agent for dip-molding preferably contains a crosslinking agent or a vulcanizing agent capable of crosslinking polymers, and may be blended with zinc oxide, sulfur, a vulcanization accelerator, and other components. As the vulcanizing agent, a vulcanizing agent that is usually used in dip-molding can be used, and examples thereof include sulfur such as powdered sulfur, sulfur flowers, precipitated sulfur, colloidal sulfur, surface-treated sulfur, and insoluble sulfur; and polyamines such as hexamethylenediamine, triethylenetetramine, and tetraethylenepentamine; however, sulfur is particularly preferable. The amount of the vulcanizing agent sulfur used is preferably 0.1 to 5 parts by weight and more preferably 0.3 to 2 parts by weight with respect to 100 parts by weight of the latex solid content. As the vulcanization accelerator, a vulcanization accelerator that is usually used in dip-molding can be used, and examples thereof include dithiocarbamic acids such as diethyl dithiocarbamic acid, dibutyl dithiocarbamic acid, di-2-ethylhexyl dithiocarbamic acid, dicyclohexyl dithiocarbamic acid, diphenyl dithiocarbamic acid, and dibenzyl dithiocarbamic acid, and zinc salts thereof; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbonylthio)benzothiazole, 2-(2,6-dimethyl-4-morpholinethio)benzothiazole, 2-(4'-morpholinodithio)benzothiazole, 4-morpholinyl-2-benzothiazyl disulfide, and 1,3-bis(2-benzothiazyl mercaptomethyl)urea. Among these, dibutyldithiocarbamate, 2-mercaptobenzothiazole, and zinc 2-mercaptobenzothiazole are preferable. These vulcanization accelerators can be used alone or in combination of two or more kinds thereof. The amount of the vulcanization accelerator used is 0.1 to 5 parts by weight and preferably 0.3 to 2 parts by weight with respect to 100 parts by weight of the latex solid content. Zinc oxide is usually used for the purpose of vulcanization promoting effect and crosslinking agent effect. A metal oxide other than zinc oxide may be used, and an oxide of a divalent metal or a trivalent metal may be used. Examples thereof include magnesium oxide, aluminum oxide, barium oxide, vanadium oxide, chromium oxide, titanium oxide, lead oxide, and iron oxide. The amount of zinc oxide used is 5 parts by weight or less and preferably 2 parts by weight or less with respect to 100 parts by weight of the latex solid content. These metal oxide compounds may be used as a mixture of polyethylene glycol and a hydroxide salt.

### [Production of Compound Composition]

The compound composition is produced by mixing a pH adjuster, a surfactant, water, a crosslinking agent, a pigment, an antioxidant, a preservative, a wax, an inorganic filler, and the like with the latex composition produced in the polymerization reaction step under stirring as necessary. In a case of producing a dip-molded product such as a glove, the compound composition is produced by using a carboxyl group-containing nitrile rubber latex as the latex composition, and the producing is carried out by performing a processing step using a hand mold for immersion processing. As a general method of generating a crosslinking structure in the carboxyl group-containing nitrile rubber latex, it is general to use a combination of sulfur, a crosslinking agent containing sulfur, a vulcanization accelerator that promotes a crosslinking reaction, a metal compound containing a polyvalent metal such as zinc oxide, and the like. The compound composition is left to stand and aged under stirring after producing. The solid content concentration of the dip-molding composition of the present disclosure is preferably 10% to 40% by weight and more preferably 15% to 30% by weight. The pH of the dip-molding composition is 8.5 to 12 and preferably 9 to 11.

### [Production of Dip-molded Product]

The production of the dip-molded product carried out in the present disclosure includes a dip-molding step of coagulating and forming a film of the compound composition on a mold for dip-molding and a crosslinking step of generating a crosslinking structure in the latex composition. Examples of the dip-molding method include a direct immersion method, a coagulant dipping method, an electric immersion method, a thermosensitive immersion method, and the like, and any method may be used. Among these, a direct immersion method and a coagulant dipping method are preferable from the viewpoint that a dip-molded product having a uniform thickness is easily obtained. In a case of the coagulant dipping method, the dip-molding step is carried out by a method of immersing a mold for dip-molding in a coagulant solution to adhere a coagulant to the surface of the mold and then immersing the mold in the compound composition to form a dip-molding layer on the surface of the mold. The dip-molding step and the crosslinking step may be carried out at the same time, or either step may be carried out before the other step. The coagulant used in the coagulant dipping method is generally provided as a mixture of a coagulant component, a solvent, a surfactant, a wetting agent, an inorganic filler, a release agent, and the like. Examples of the coagulant component include a metal halide such as barium chloride, calcium chloride, magnesium chloride, aluminum chloride, and zinc chloride, a nitrate such as barium nitrate, calcium nitrate, and zinc nitrate, an acetate such as barium acetate, calcium acetate, and zinc acetate, a sulfate such as calcium sulfate, magnesium sulfate, and aluminum sulfate, and an acid such as acetic acid, sulfuric acid, hydrochloric acid, and nitric acid. These compounds can be used alone or in combination, but among these, calcium nitrate and calcium chloride are more preferable. The solvent is selected from water, an alcohol, an acid, and the like as necessary. The surfactant is used for the purpose of uniformly adhering a coagulant liquid to the surface of the mold or facilitating release, and a nonionic surfactant, a metal soap, or other compounds is used. As the metal soap, calcium stearate, ammonium stearate, zinc stearate, and as necessary, a metal oxide, calcium carbonate, talc, an inorganic filler, or the like may be used. The crosslinking step is a step of generating a crosslinking structure in the dip-molded product, and in general, the crosslinking step is a step of aging carried out by adding a stabilizer, a reaction agent, a crosslinking agent, or the like or performing a heat treatment, stirring, aging, filtration, or the like in a case where the polymer is present as the latex composition, a crosslinking step carried out in parallel with a pre-vulcanization step and a dip-molding step, or a crosslinking step carried out after the dip-molding step, and the step is introduced according to the performance required for the dip-molded product. An example of the step of producing a dip-molded product from the compound composition is shown below.
1) A step of cleaning a mold for molding, drying the mold at 50°C to 100°C, and preheating the mold.
2) A step of immersing the mold for molding in a coagulant liquid containing calcium ions or the like, taking out the mold for molding, drying the mold for molding, and adhering and drying the coagulant on the surface of the mold for molding.
3) A step of immersing the mold for molding, on which the coagulant is adhered in 2), in the compound composition, taking out the mold for molding, and gelling the compound composition.
4) A step of subjecting the dip-molded product to a leaching treatment with water or warm water at 30°C to 80°C to remove impurities and unnecessary substances.
5) A precuring step of subjecting the molded product to a heat treatment at a temperature of 60°C to 150°C for about 1 to 120 minutes to promote drying of the dip-molded product, and a curing step of promoting film formation and a crosslinking reaction of the dip-molded product.
6) A step of subjecting the dip-molded product to an anti-blocking treatment as necessary.
7) A step of releasing the dip-molded product from the mold for molding.

In addition, in the steps of 4) to 7), a step to be carried out as necessary may be interchanged.

The anti-blocking treatment includes a chlorination treatment method of immersing the dip-molded product in an aqueous solution obtained by mixing sodium hypochlorite and hydrochloric acid or treating the dip-molded product in a chlorine gas chamber, a polymer coating method of applying a polymer having anti-blocking performance onto the molded product, a slurry method of immersing the dip-molded product in an aqueous solution containing a lubricant component, or the like, and any method may be carried out. In addition, the anti-blocking treatment may be carried out after the dip-molded product is released from the mold. The characteristics of the obtained dip-molded product are evaluated after the molded product is released from the mold and then subjected to temperature conditioning and humidity conditioning for 1 day or more. In the implementation of the present disclosure, the characteristics of the molded product, such as the tensile strength at the time of breakage, the elongation at breakage, and the stress at 300% elongation, which are indicators of flexibility, are particularly important.

### [Evaluation of Dip-molded product]

### (Example 1)

After replacing the inside of the container with nitrogen using a pressure-resistant reaction vessel having a stirring device 1 according to the present embodiment shown in FIG. 1, 67.5 parts of 1,3-butadiene, 27 parts of acrylonitrile, 5.5 parts of methacrylic acid, 0.6 parts of a polymerization regulator (t-dodecyl mercaptan) (TDM), 115 parts of ion-exchanged water, 3 parts of an anionic emulsifier (sodium dodecylbenzene sulfonate) (SDBS), 0.5 parts of a dispersant (DEMOL N manufactured by Kao Corporation), an oxygen scavenger (sodium dithionite), 0.1 parts of a chelating agent (EDTA) (CHELEST 400G manufactured by CHELEST Corporation), a particle size adjusting agent (potassium pyrophosphate), 0.005 parts of a redox polymerization initiator (p-menthane hydroperoxide) (PMHP) (manufactured by NOF Corporation; PERMENTA H), and 0.02 parts of a redox polymerization initiator (sodium formaldehyde sulfoxylate) (SFS), and 0.005 parts of ferrous sulfate were added, and the reaction was carried out for 20 hours while maintaining the polymerization temperature at 25°C under stirring. The monomer concentration was calculated as a weight ratio of the total ratio of polymerizable component monomers to the total weight of the reagents charged into the reaction vessel. After confirming that the polymerization conversion rate was 95% or more, a pH adjuster and a polymerization terminator were added to terminate the polymerization reaction. After removing unreacted monomers from the obtained latex under reduced pressure, the pH and concentration of the copolymer latex were adjusted with an ammonia aqueous solution to a solid content concentration of 45% and a pH of 8.3, and then 0.5 parts by weight of a water dispersion of a butylated reaction product of p-cresol and dicyclopentadiene (for example, manufactured by Akron Dispersions, Inc.: Bostex 362) in terms of solid content was added to 100 parts by weight of the latex as an antioxidant to obtain a copolymer latex composition.

The amount of agglomerates deposited in the reaction vessel in which the above-described polymerization reaction was carried out was determined as a weight ratio of the amount of agglomerates to the total amount of polymers produced in the polymerization reaction. In addition, the total amount of agglomerates dispersed in the latex composition was removed by filtration through a 200-mesh wire mesh, and the amount was determined as a weight ratio of the total amount of agglomerates to the total solid content of the latex composition.

A 3% potassium hydroxide aqueous solution and soft water were added to the obtained latex composition under stirring, and the solid content concentration and pH were adjusted to be in a range of 17% to 20% and 9.5 to 10, respectively. Thereafter, 1.5 parts by weight of a titanium oxide dispersion manufactured by AQUASPACTION Co., Ltd., 1.1 parts by weight of a zinc oxide dispersion, 1.1 parts of a sulfur dispersion, and 0.7 parts of a zinc diethyldithiocarbamate (ZDEC) dispersion were added thereto, and the mixture was stirred at room temperature for 12 hours. Then, the agglomerates were removed using a 200-mesh wire mesh, and the bubbles were removed, and the temperature of the latex compounding composition was adjusted to be 20°C to 40°C. In this way, the amount of agglomerates removed from the latex compounding composition was calculated as a weight ratio of the amount of agglomerates to the total amount of the compounding composition as the amount of agglomerates after compounding.

Next, a washed and heated ceramic dipping hand mold was immersed in a coagulant consisting of a mixed aqueous solution of 14% by weight of calcium nitrate and 1.5% calcium stearate, and then dried at 70°C for 3 minutes to adhere the coagulant. The hand mold was immersed in the latex compounding composition for an immersion time of 30 to 60 seconds, taken out, and heated at 80°C for 1 minute to gel the latex compounding composition on the hand mold, thereby producing a thin film. Thereafter, the hand mold was immersed in warm water at 60°C to 70°C for 3 minutes to perform a leaching treatment, and then left in a test oven and heated at 70°C for 5 minutes, and then heated at 130°C for 20 minutes without being taken out of the oven.

After cooling the hand mold until the surface temperature reached 40°C, the hand mold was immersed in a chlorine dipping bath in which the active chlorine concentration was adjusted to 900 to 1,000 ppm with sodium hypochlorite and hydrochloric acid for 40 seconds, washed with water, washed with a 0.4% sodium sulfate aqueous solution, washed with water again, and then dried at 100°C for 5 minutes. After sufficiently cooling the hand mold at room temperature, the thin film was demolded from the hand mold to produce a nitrile glove. The produced nitrile glove was conditioned at a temperature of 25°C and a humidity of 55 RH% for 24 hours, and then the physical strength was measured in accordance with ASTM D412.

A punching test piece was produced from the nitrile glove, which is a dip-molded product, using DieC manufactured by Dumbbell Co., Ltd. The test piece was pulled at a tensile speed of 500 mm/min, and the stress at 300% elongation, the breaking strength, and the elongation at breakage were measured.

### [Example 2]

A latex composition in which the amount of acrylonitrile monomers used was increased was produced using the reaction vessel having the same stirring device as that described in Example 1, and a nitrile glove was produced in the same manner as in Example 1 and evaluated.

### (Example 3)

A nitrile glove was produced in the same manner as in Example 1 under the condition that the stirring rotation speed was reduced to 130 rpm using the reaction vessel having the same stirring device as that described in Example 1, and evaluated.

### [Example 4]

A polymerization reaction was performed in the same manner as in Example 2 under the condition that the stirring rotation speed was reduced to 130 rpm, and a nitrile glove was produced and evaluated.

### (Comparative Example 1)

A latex composition was produced in the same manner as in Example 1 using a pressure-resistant reaction vessel having a stirring device 1 according to the comparative example described in FIG. 2, and a nitrile glove was produced through the same steps as in Example 1 and evaluated.

### (Comparative Example 2)

A latex composition in which the amount of acrylonitrile monomers used was increased was produced using the reaction vessel having the same stirring device as that in Comparative Example 1, and a nitrile glove was produced in the same manner as in Example 1 and evaluated.

### (Comparative Example 3)

A nitrile glove was produced in the same manner as in Example 1 under the condition that the stirring rotation speed was reduced to 130 rpm using the reaction vessel having the same stirring device as that in Comparative Example 1, and evaluated.

### (Comparative Example 4)

A nitrile glove was produced in the same manner as in Example 1 under the condition that the stirring rotation speed was reduced to 130 rpm using the reaction vessel having the same stirring device as that in Comparative Example 2, and evaluated.

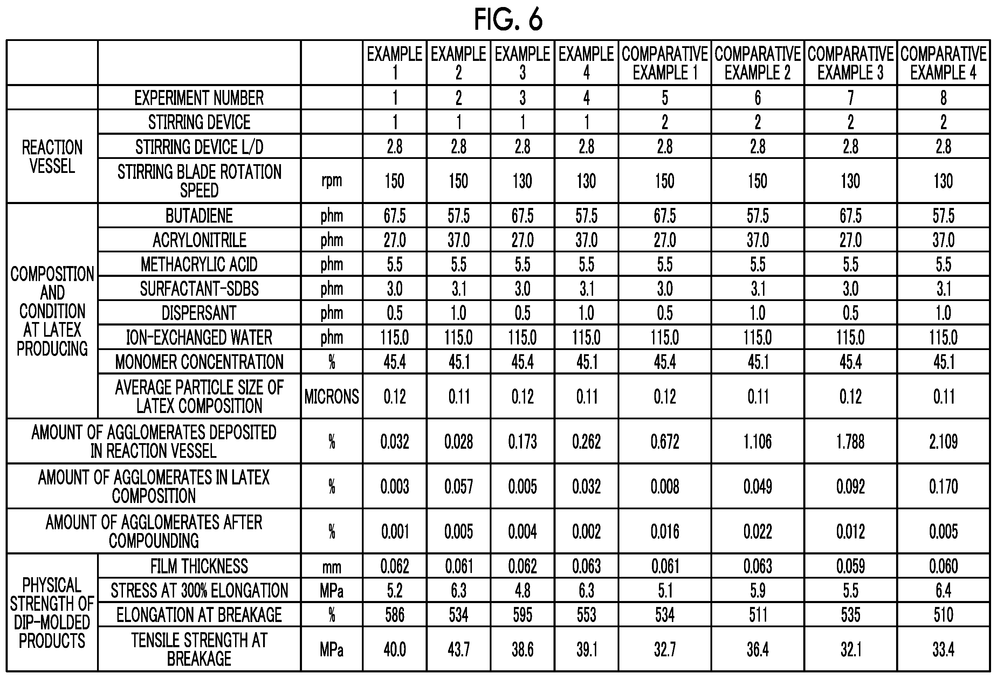

FIG. 6 shows the production conditions, the amount of agglomerates, and the measured physical strength of the nitrile gloves according to Examples 1 to 4 and Comparative Examples 1 to 4. In Examples 1 to 4, since the fluid to be stirred could be effectively stirred, it was confirmed that the amount of agglomerates was smaller than that in Comparative Examples 1 to 4, and thus the dip-molded products produced in Examples 1 to 4 had better physical strength than those in Comparative Examples 1 to 4.

The present disclosure has been described above based on the embodiment. Various modifications are possible for combinations of the components and processes in the illustrative embodiments, and it will be apparent to those skilled in the art that such modifications are included within the scope of the present disclosure.

The configurations, operations, and functions of the respective devices and methods described in the embodiments can be implemented by hardware resources or software resources, or by cooperation of hardware resources and software resources. As hardware resources, for example, a processor, ROM, RAM, and various integrated circuits can be used. As software resources, for example, programs such as an operating system and an application can be used.

### Industrial Applicability

The present disclosure relates to a stirring device and the like.

### Reference Signs List

- 1: stirring device
- 2: stirring tank
- 3: stirring blade
- 21: straight tubular portion
- 22: bottom portion
- 30: rotary shaft
- 31 to 35: blade portion

## Claims

1. A stirring device comprising:
a stirring blade that stirs, by rotation, a fluid to be stirred, which is accommodated in a stirring tank,
wherein a ratio L/D of a liquid level height L of the fluid to be stirred in a height direction in the stirring tank to a tank diameter D of the stirring tank in a radial direction is 2 or more,
the stirring blade includes a plurality of blade portions disposed to be separated from each other in the height direction,
blade diameters of the plurality of blade portions in the radial direction increase as the blade portions are closer to a bottom portion of the stirring tank, and
each of the plurality of blade portions generates a flow of the fluid to be stirred having a height direction component toward the bottom portion of the stirring tank.

2. The stirring device according to claim 1,
wherein the stirring blade includes three or more blade portions disposed to be separated from each other in the height direction.

3. The stirring device according to claim 1 or 2,
wherein the plurality of blade portions are each formed by an inclined paddle blade having a different blade diameter.

4. The stirring device according to claim 1 or 2,
wherein the fluid to be stirred contains a monomer having a conjugated diene structure and containing, by polymerization, a carboxyl group in a polymer chain, and an aqueous medium.

5. The stirring device according to claim 4,
wherein a specific gravity difference between the monomer contained in the fluid to be stirred and the aqueous medium is more than 0.2 and less than 0.4.

6. The stirring device according to claim 1 or 2,
wherein each of the blade portions generates the flow of the fluid to be stirred having the height direction component toward the bottom portion of the stirring tank by rotation.

7. The stirring device according to claim 1 or 2,
wherein a blade diameter of a blade portion closest to the bottom portion of the stirring tank among the plurality of blade portions is 50% or more and less than 80% of the tank diameter D.

8. The stirring device according to claim 1 or 2,
wherein a blade diameter of a blade portion farthest from the bottom portion of the stirring tank among the plurality of blade portions is 30% or more and less than 55% of the tank diameter D.

9. The stirring device according to claim 1 or 2,
wherein a distance in the height direction between two blade portions adjacent to each other in the height direction is smaller than a blade diameter of a blade portion farthest from the bottom portion of the stirring tank.

10. The stirring device according to claim 1 or 2,
wherein an angle formed by a straight line connecting tips of two blade portions adjacent to each other in the height direction in the radial direction and a horizontal plane is 65 degrees or more and less than 85 degrees.

11. A stirring method in a stirring device including a stirring blade that stirs, by rotation, a fluid to be stirred, which is accommodated in a stirring tank, in which a ratio L/D of a liquid level height L in a height direction of the fluid to be stirred in the stirring tank to a tank diameter D in a radial direction of the stirring tank is 2 or more, and the stirring blade includes a plurality of blade portions that are disposed to be separated from each other in the height direction and that have blade diameters in the radial direction increasing as the blade portions are closer to a bottom portion of the stirring tank, the stirring method comprising:
generating a flow of the fluid to be stirred having a height direction component toward the bottom portion of the stirring tank by rotation of each of the blade portions.

12. The stirring method according to claim 11,
wherein the fluid to be stirred contains a monomer having a conjugated diene structure and containing, by polymerization, a carboxyl group in a polymer chain, and an aqueous medium.

13. A dip-molding composition comprising:
a polymer latex composition produced by using the stirring method according to claim 12,
wherein the polymer latex composition has a structural unit (a) derived from the conjugated diene monomer and a structural unit (b) derived from an ethylenically unsaturated carboxylic acid monomer.

14. The dip-molding composition according to claim 13,
wherein a polymer contained in the polymer latex composition has the structural unit (a) derived from the conjugated diene monomer, the structural unit (b) derived from the ethylenically unsaturated carboxylic acid monomer, and a structural unit (c) derived from an ethylenically unsaturated nitrile monomer.

15. The dip-molding composition according to claim 14,
wherein a content ratio of the structural unit (a) derived from the conjugated diene monomer, the structural unit (b) derived from the ethylenically unsaturated carboxylic acid monomer, and the structural unit (c) derived from the ethylenically unsaturated nitrile monomer in the polymer contained in the polymer latex composition is 50% to 78% by mass, 2% to 10% by mass, and 20% to 40% by mass, respectively.

16. The dip-molding composition according to any one of claims 13 to 15,
wherein the dip-molding composition has a content ratio of zinc oxide of 3% by mass or less, a content ratio of sulfur of 2% by mass or less, and a content ratio of a vulcanization accelerator of 2% by mass or less with respect to 100% by mass of a solid content of the polymer latex composition.

17. A dip-molded product obtained by molding the dip-molding composition according to any one of claims 13 to 15.

18. The dip-molded product according to claim 17, wherein the dip-molded product is a glove.
